# EUROPÄISCHE PATENTANMELDUNG

(11) **EP 4 238 939 A1**
(43) Veröffentlichungstag der Anmeldung: **06.09.2023**
(21) Anmeldenummer: 23157993.9
(22) Anmeldetag: 22.02.2023
(51) Int. Cl.: C02F 1/00, C02F 1/28, C02F 1/44, C02F 1/32

(54) **VERFAHREN ZUR DESINFEKTION EINES VOLUMENSTROMES WASSER, FILTEREINHEIT UND ANORDNUNG ZUR BEREITSTELLUNG VON WARMWASSER**

(30) Priorität: 04.03.2022 DE 102022105112
(71) Anmelder: Vaillant GmbH, 42859 Remscheid NRW (DE)
(72) Erfinder: Badenhop, Thomas, 42499 Hückeswagen (DE)
(74) Vertreter: Popp, Carsten

(57) **Zusammenfassung**

Vorgeschlagen wird ein Verfahren zur Desinfektion eines Volumenstromes Wasser (2), umfassend zumindest die folgenden Schritte:
a) Entkeimen des Volumenstromes Wasser (2) durch ein erstes Entkeimungsfilterelement (4),
b) Bestrahlen des Wassers mit Ultraviolett (UV)-Strahlung (9) und Erfassen der UV-Strahlung (9) nach einem zumindest teilweisen Durchdringen des Volumenstromes Wasser (2),
c) Feststellen einer Keimbelastung des Volumenstromes Wasser (2) und damit eines Erfolges des Entkeimens gemäß Schritt a) durch Auswerten der erfassten UV-Strahlung (9).

Anhand eines hier vorgeschlagenen Verfahrens kann ein Volumenstrom Wasser (2) mittels eines ersten Entkeimungsfilterelements (4) desinfiziert werden (Schritt a)) und der Erfolg der Desinfektion durch ein Auskoppeln (Ausstrahlen) von UV-Strahlung (9) und einem Erfassen der ausgesendeten UV-Strahlung (9) nach einem zumindest teilweisen Durchdringen des Volumenstromes Wasser (2), und einem Auswerten der erfassten UV-Strahlung (9) festgestellt werden.

## Beschreibung

Die Erfindung betrifft ein Verfahren zur Desinfektion eines Volumenstromes Wasser, eine Filtereinheit, eine Anordnung zur Bereitstellung von Warmwasser und eine Verwendung eines Senders und eines Empfängers von UV-Strahlung.

Einrichtungen zur Trinkwasserversorgung, insbesondere zur Bereitstellung von Warmwasser, müssen regelmäßig desinfiziert werden. Häufig kommt hierbei eine thermische Desinfektion zum Einsatz, bei der das Wasser und damit alle in Berührung kommenden Leitungsteile etc. durch eine Erwärmung auf mindestens ca. 60°C [Grad Celsius] entkeimt werden. In der DE 100 34 513 A1 wird beispielhaft eine Vorrichtung zur Desinfektion eines gesamten Zirkulations-Volumenstromes vorgestellt, bei dem der Volumenstrom Trinkwasser in einem Desinfektionsraum entkeimt wird. Problematisch ist der hohe energetische Aufwand für die thermische Desinfektion, da das gesamte zum Verbrauch bestimmte Wasser auf eine Temperatur von mehr als 60 °C erwärmt werden muss, wobei durch die hohe Temperaturdifferenz zur Umgebung auch ein hoher Wärmeverlust der Leitungen auftritt.

Insbesondere bei Heizungsanlagen die eine Wärmepumpe als Wärmequelle nutzen, kann aufgrund des vorhandenen Temperaturniveaus der Wärmepumpe Wasser nur auf eine Temperatur von 40°C - 50°C erwärmt werden. Eine Erwärmung auf höhere Temperaturen, beispielsweise auf eine Desinfektionstemperatur von 60 °C - 65 °C, kann bei Wärmpumpenanlagen in der Regel nur durch externe Energiequellen, wie beispielsweise einem elektrischen Zusatzheizer realisiert werden. Ein derartiger Zusatzheizer kann die energetischen Vorteile einer Wärmpumpenanlage durch den zusätzlichen Energieeinsatz zur Desinfektion jedoch zumindest teilweise wieder kompensieren, so dass eine Energieeinsparung einer Warmwasserbereitstellung mittels Wärmepumpenanlage weitestgehend verloren gehen kann.

Auch bekannt ist eine Desinfektion eines Volumenstromes Trinkwasser durch Ultraviolett-Strahlung. Eine hierzu geeignete Vorrichtung wird beispielsweise in der WO 2017/050656 A1 vorgeschlagen, bei der eine UV-Strahlung emittierende Gasentladungslampe in einem Rohr angeordnet sein kann, durch das das zu desinfizierende Wasser geleitet werden kann. Jedoch ist auch der Energieeinsatz für eine Desinfektion mittels UV-Strahlung sehr hoch, so dass gleichfalls mögliche Einsparungen durch eine Warmwasserbereitstellung mittels Wärmepumpentechnik kompensiert werden kann.

Hiervon ausgehend ist es Aufgabe der Erfindung, ein Verfahren zur Desinfektion eines Volumenstromes Wasser, eine Filtereinheit und eine Anordnung zur Bereitstellung von Warmwasser vorzuschlagen, die die geschilderten Probleme des Standes der Technik zumindest teilweise überwindet. Insbesondere soll energieeffiziente und sichere Desinfektion eines Volumenstromes Wasser ermöglicht werden.

Zudem soll die Erfindung die Komplexität einer Anordnung zur Bereitstellung von Warmwasser zumindest nicht wesentlich erhöhen und nur geringe bauliche Veränderungen an einer derartigen Anlage erfordern und eine einfache Integration in bestehende Anlagen möglich sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Desinfektion eines Volumenstromes Wasser bei, umfassend zumindest die folgenden Schritte:
a) Entkeimen des Volumenstromes Wassers durch ein erstes Entkeimungsfilterelement,
b) Bestrahlen des Volumenstromes Wassers mit Ultraviolett (UV)-Strahlung und Erfassen der UV-Strahlung nach einem zumindest teilweisen Durchdringen des Volumenstromes Wasser,
c) Feststellen einer Keimbelastung des Volumenstromes Wassers und damit eines Erfolges des Entkeimens gemäß Schritt a) durch Auswerten der erfassten UV-Strahlung.

Die Schritte a), b) und c werden bei einem regulären Verfahrensablauf mindestens einmal in der angegebenen Reihenfolge durchgeführt. Dabei ist es insbesondere möglich, die Schritte a), b) und c) zur Desinfektion eines Volumenstromes Wasser gleichzeitig durchzuführen. Das Verfahren dient insbesondere der Desinfektion eines Volumenstromes Wasser und kann vorteilhaft (automatisiert) von einem Regel- und Steuergerät, beispielsweise einer Anordnung zur Bereitstellung von Warmwasser (beispielsweise einem Heizgerät) durchgeführt werden. Bei dem Volumenstrom Wasser kann es sich insbesondere um einen Volumenstrom Trink- oder Brauchwasser handeln.

Gemäß einem Schritt a) kann ein Entkeimen des Volumenstromes Wasser durch ein erstes Entkeimungsfilterelement erfolgen. Hierbei kann ein vorgegebener bzw. zu entkeimender Volumenstrom des Wassers durch das erste Entkeimungsfilterelement hindurchgeführt werden. Das Filterelement ist so aufgebaut, dass dieses Keime zurückhalten bzw. einlagern kann.

Gemäß einem Schritt b) kann ein Bestrahlen des Volumenstromes Wasser mit Ultraviolett (UV)-Strahlung und ein Erfassen der (ausgestrahlten) UV-Strahlung nach einem zumindest teilweisen Durchdringen des Wassers erfolgen. Bevorzugt wird UV-Strahlung durch das entkeimte Wasser hindurchgesendet, wobei die Strahlung danach detektiert und analysiert wird. Es können beispielsweise in einem Leitungselement (Rohr) gegenüberliegend positioniert an einer Wandung des Leitungselementes mindestens ein Sender (Quelle) zum Auskoppeln (Ausstrahlen) und mindestens ein Empfänger (Sensor) zum Erfassen von UV-Strahlung vorgesehen sein.

Gemäß einem Schritt c) kann eine Keimbelastung des Volumenstromes Wassers durch Auswerten der in Schritt b) erfassten UV-Strahlung erfolgen. Das Auswerten der erfassten UV-Strahlung kann sich insbesondere auf eine Veränderung der UV-Strahlung nach dem zumindest teilweisen Durchdringen des Volumenstromes Wasser, also einen Vergleich der ausgestrahlten UV-Strahlung mit der erfassten UV-Strahlung, beziehen. Eine Veränderung der UV-Strahlung kann dabei insbesondere durch eine Veränderung des Frequenzspektrums (der Wellenlänge) der UV-Strahlung beim Durchdringen des Volumenstromes Wasser erkannt werden.

Gemäß einer vorteilhaften Ausgestaltung kann im Schritt b) der Volumenstrom Wasser mit UV-Strahlung in Form von UV-C Strahlung bestrahlt werden. Eine bekannte Unterteilung von UV-Strahlung legt Wellenlängenbereiche fest, die als UV-A, UV-B und UV-C Strahlung bezeichnet werden können. Die Wellenlänge von UV-A Strahlung liegt in einem Bereich von 380 bis 315 nm [Nanometer], die von UV-B Strahlung in einem Bereich zwischen 315 bis 280 nm und die Wellenlänge von UV-C Strahlung in einem Bereich zwischen 280 bis 100 nm.

Bei einem Auftreffen von UV-C Strahlung auf Keime kann Energie der UV-C Strahlung absorbiert werden, wodurch diese ihre Wellenlänge vergrößert. Insbesondere kann UV-C Strahlung nach einem Auftreffen auf Keime in UV-B und/oder UV-A Strahlung umgewandelt werden. Bei einer Detektion von UV-A und/ oder UV-B Strahlung in der erfassten UV-Strahlung kann somit von einer Keimbelastung des Volumenstromes Wasser ausgegangen werden, der auf einen Ausfall des ersten Entkeimungsfilterelementes schließen lässt. Demgegenüber kann bei einem Erfassen von UV-C Strahlung in eine Intensität, die weitestgehend der, der ausgekoppelten UV-C Strahlung entspricht, von einer vollständigen Entkeimung des Volumenstromes Wasser durch das erste Entkeimungsfilterelement ausgehen.

Die Bezeichnung "Keim" bezeichnet hier insbesondere organische Bestandteile des Volumenstromes Wasser, insbesondere Krankheitserreger, die gesundheitsgefährdend sein können, beispielsweise Legionellen.

Somit kann anhand eines hier vorgeschlagenen Verfahrens ein Volumenstrom Wasser mittels eines ersten Entkeimungsfilterelements desinfiziert werden (Schritt a)) und der Erfolg der Desinfektion durch ein Auskoppeln (Ausstrahlen) von UV-Strahlung und einem Erfassen der ausgesendeten UV-Strahlung nach einem zumindest teilweisen Durchdringen des Volumenstromes Wasser, und einem Auswerten der erfassten UV-Strahlung festgestellt werden.

Gemäß einer vorteilhaften Ausgestaltung kann bei einem Feststellen einer Keimbelastung in Schritt c) eine Information hierzu über eine Anzeigeeinrichtung und/ oder ein Netzwerk zum Abruf bereitstellt und/ oder als Nachricht versendet werden. Die Anzeigeeinrichtung kann dabei insbesondere eine Anzeigeeinrichtung einer Anordnung zur Warmwasserbereitstellung, beispielsweise eines Heizgerätes, sein. Das Netzwerk kann hierbei insbesondere das Internet sein. In vorteilhafter Weise kann somit bei einer Feststellung einer Keimbelastung gemäß Schritt c) ein Nutzer und/oder ein Fachbetrieb über den Ausfall des ersten Entkeimungsfilterelementes informiert werden.

Gemäß einer weiteren vorteilhaften Ausgestaltung kann in einem Schritt d) nach einem Feststellen einer Keimbelastung in Schritt c) ein zweite Entkeimungsfilterelement zur Entkeimung des Volumenstromes Wasser einbezogen werden. Das zweite Entkeimungsfilterelement kann hierzu insbesondere dem ersten Entkeimungsfilterelement in Strömungsrichtung des Volumenstromes Wasser gesehen, nachgeordnet sein, um eine mögliche Keimbelastung des ersten Entkeimungsfilterelementes abzufangen.

Hierbei handelt es sich bei den Schritten b) und c) um eine reine, eigenständige und/oder separate Überwachung der (zuvor durchgeführten) Entkeimung. Die Strahlungsintensität der Bestrahlung mit UV-Strahlung gemäß Schritt b) ist so bemessen, dass diese für eine (wirksame) Desinfektion des Wassers nicht ausreichend ist, die Entkeimung erfolgt demnach praktisch ausschließlich durch das erste Entkeimungsfilterelement in Schritt a) und gegebenenfalls durch das zweite Entkeimungsfilterelement in Schritt d). Vorteilhaft kann so der Energiebedarf des Verfahrens zur Entkeimung gegenüber einer (wirksamen, hier nicht durchgeführten) Entkeimung durch UV-Strahlung erheblich gesenkt werden.

Das erste und/ oder das zweite Entkeimungsfilterelement kann dabei ein bekannter Filter zur Desinfektion von Wasser sein. Beispielhaft aber nicht abschließend können insbesondere folgende Filter bzw. Verfahren eingesetzt werden:
- ein Sterilfilter,
- eine Ultrafiltration,
- eine Umkehrosmose,
- ein Hygienefilter basierend auf dem Gecko-Prinzip, oder
- ein Adsorptionsfilter.

Besonders vorteilhaft benötigt das erste Entkeimungsfilterelement für die Desinfektion keine oder eine unwesentliche Energiezufuhr.

Gemäß einer weiteren vorteilhaften Ausgestaltung kann ein Erreichen einer Kapazitätsgrenze eines zweiten Entkeimungsfilterelementes nach dessen Inbetriebnahme im Rahmen von Schritt d) bzw. eine Annäherung an dieselbe erfasst werden. Nach einem Erreichen der Kapazitätsgrenze kann erneut eine Information hierzu über ein Netzwerk bereitgestellt oder versandt werden, und/ oder auch der Volumenstrom Wasser und somit die Wasserbereitstellung gestoppt werden, um eine Nutzung keimbelasteten Wassers zu verhindern.

Ein Erreichen der Kapazitätsgrenze kann durch Erfassen eines Nutzungszeitraumes oder auch einer gefilterten Wassermenge erfolgen. Die gefilterte Wassermenge wäre beispielsweise durch einen Durchflusssensor bestimmbar.

Gemäß einer vorteilhaften Ausgestaltung kann eine Überwachung der Strahlungsintensität der UV-Strahlung erfolgen. Bei einem Unterschreiten eines Grenzwertes kann
- eine Wasserabgabe gestoppt und/ oder
- eine sekundäre Entkeimungseinrichtung in Betrieb genommen, und/ oder
- eine Information über das Erreichen des Grenzwertes angezeigt, über ein Netzwerk bereitgestellt und/ oder als Nachricht versandt werden.

Das Unterschreiten des Grenzwertes kann eine für ein Feststellen einer Keimbelastung unzureichende Strahlungsintensität angeben.

Nach einem weiteren Aspekt wird auch eine Filtereinheit zur Durchführung eines hier vorgeschlagenen Verfahrens vorgeschlagen, umfassend ein erstes Entkeimungsfilterelement, einen Sender von UV-Strahlung und einen Empfänger von UV-Strahlung. Das erste Entkeimungsfilterelement, der Sender und der Empfänger können einem Strömungskanalabschnitt zugeordnet sein bzw. mit diesem eine Einheit bilden. Sender und der Empfänger von UV-Strahlung können (diametral) gegenüberliegend an dem Strömungskanalabschnitt angeordnet sein, beispielsweise mit einem Abstand kleiner 50 cm [Zentimeter] in Strömungsrichtung nach dem ersten Entkeimungsfilterelement. Der Strömungskanalabschnitt kann einen Eingang- und einen Ausgangsflansch aufweisen, mittels derer der Strömungskanalabschnitt an bzw. in eine Wasserleitung montierbar ist. Dem Strömungskanalabschnitt kann eine Baugruppe zugeordnet sein, welche dort zum Beispiel auch befestigt sein kann, die elektrische Leitungen und ggf. Elektronikkomponenten oder sogar einen Mikroprozessor (zur Auswertung der UV-Strahlung) umfassen kann.

Dabei handelt es sich bei dem Sender und dem Empfänger von UV-Strahlung um eine (reine) Überwachungseinrichtung zum Erkennen des Ergebnisses der Entkeimung durch das erste Entkeimungsfilterelement. Der Sender von UV-Strahlung kann somit mit einer Strahlungsleistung betrieben werden bzw. diese aufweisen, die für eine (wirksame) Entkeimung des Volumenstromes Wasser praktisch nicht ausreichend ist.

Gemäß einer vorteilhaften Ausgestaltung kann die Filtereinheit ein zweites Entkeimungsfilterelement umfassen, dass insbesondere dem ersten Entkeimungsfilterelement bezogen auf die Strömungsrichtung des Volumenstromes Wasser, nachgeordnet positioniert sein kann.

Gemäß einer vorteilhaften Ausgestaltung kann die Filtereinheit ein Vorfilterelement umfassen. Das Vorfilterelement kann dabei insbesondere, bezogen auf die Strömungsrichtung des Volumenstromes Wasser, vor dem ersten Entkeimungsfilterelement positioniert sein und dazu eingerichtet sein, gröbere Verunreinigungen abzusondern und so das erste Entkeimungsfilterelement zu entlasten.

Gemäß einer vorteilhaften Ausgestaltung kann das erste und/ oder zweite Entkeimungsfilterelement der Filtereinheit
- ein Sterilfilter,
- eine Ultrafiltration,
- eine Umkehrosmose,
- ein Hygienefilter basierend auf dem Gecko-Prinzip, oder
- ein Adsorptionsfilter
sein oder umsetzen, oder eine Kombination sein oder umsetzen.

Gemäß einer vorteilhaften Ausgestaltung kann das erste Entkeimungsfilterelement baugleich dem zweiten Entkeimungsfilterelement sein. In vorteilhafter Weise kann bei einer regelmäßigen Wartung (durchgeführt vor dem Feststellen eines Ausfalls des ersten Entkeimungsfilterelementes) der Filtereinheit das zweite (weitestgehend ungenutzte) Entkeimungsfilterelement an die Position des ersten Entkeimungsfilterelementes und ein neues Entkeimungsfilterelement an die Position des zweiten Entkeimungsfilterelementes eingesetzt werden.

Gemäß einer vorteilhaften Ausgestaltung kann ein Sender und/ oder Empfänger von UV-Strahlung eine UV-Leuchtdiode sein. Insbesondere können sowohl Sender als auch Empfänger der UV-Strahlung durch (UV-)Leuchtdioden gebildet werden, da diese beide Funktionen erfüllen können. In vorteilhafter Weise kann so auf besonders einfache Weise eine Überprüfung von Sender und Empfänger durch ein (regelmäßiges) Vertauschen der Funktionen der Leuchtdioden (von Sender zu Empfänger und umgekehrt) verwirklicht werden.

Nach einem weiteren Aspekt wird eine Anordnung zur Bereitstellung von Warmwasser mit einem hier angegebenen Regel- und Steuergerät und einer hier angegebenen Filtereinheit vorgeschlagen.

Die Anordnung kann hierzu insbesondere eine sekundäre Entkeimungsvorrichtung umfassen. Die sekundäre Entkeimungsvorrichtung kann beispielsweise eine thermische Desinfektion des Volumenstromes Wasser durchführen, also eine Erwärmung desselben auf eine Temperatur von 60°C [Grad Celsius] bis 65°C. Alternativ kann die sekundäre Entkeimungsvorrichtung durch (intensive) Beaufschlagung des Volumenstromes Wasser mit UV-Strahlung diesen desinfizieren. Ein möglicherweise erhöhter Energieverbrauch kann für den vergleichsweise kurzen Zeitraum der Inbetriebnahme der sekundären Entkeimungseinrichtung bis zu einer Instandsetzung des ersten und gegebenenfalls zweiten Entkeimungsfilterelementes in Kauf genommen werden.

Gemäß einer vorteilhaften Ausgestaltung kann die Anordnung zur Bereitstellung von Warmwasser eine Absperrvorrichtung umfassen, die insbesondere elektrisch ansteuerbar und zu betätigen sein kann. Bei einem Auftreten einer Gefahr einer Entnahme von keimbelastetem Wasser kann durch dies durch ein (automatisiertes) Betätigen der Absperrvorrichtung vollständig verhindert werden und ein Ausbreiten der Keimbelastung in der Anordnung zur Bereitstellung von Warmwasser vermieden werden.

Nach einem weiteren Aspekt wird eine Verwendung eines Senders und eines Empfängers zur Überwachung der Entkeimung eines Entkeimungsfilterelementes eines Volumenstromes Wasser vorgeschlagen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die im Zusammenhang mit dem Verfahren erörterten Details, Merkmale und vorteilhaften Ausgestaltungen können entsprechend auch bei der hier vorgestellten Filtereinheit, der Anordnung und/oder der Verwendung auftreten und umgekehrt. Insoweit wird auf die dortigen Ausführungen zur näheren Charakterisierung der Merkmale vollumfänglich Bezug genommen.

Hier wird somit ein Verfahren zur Desinfektion von Wasser, eine Filtereinheit, eine Anordnung zur Bereitstellung von Warmwasser sowie eine Verwendung eines Senders und eines Empfängers von UV-Strahlung angegeben, welche die mit Bezug auf den Stand der Technik geschilderten Probleme zumindest teilweise lösen. Insbesondere tragen das Verfahren, die Filtereinheit, das Computerprogramm, das Regel- und Steuergerät und die Anordnung zumindest dazu bei, eine sichere und energieeffiziente Entkeimung eines Volumenstromes Wasser zu gewährleisten.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Ablauf eines hier vorgeschlagenen Verfahrens,
- Fig. 2:: eine hier vorgeschlagene Filtereinheit, und
- Fig. 3:: eine hier vorgeschlagene Anordnung zur Bereitstellung von Warmwasser.

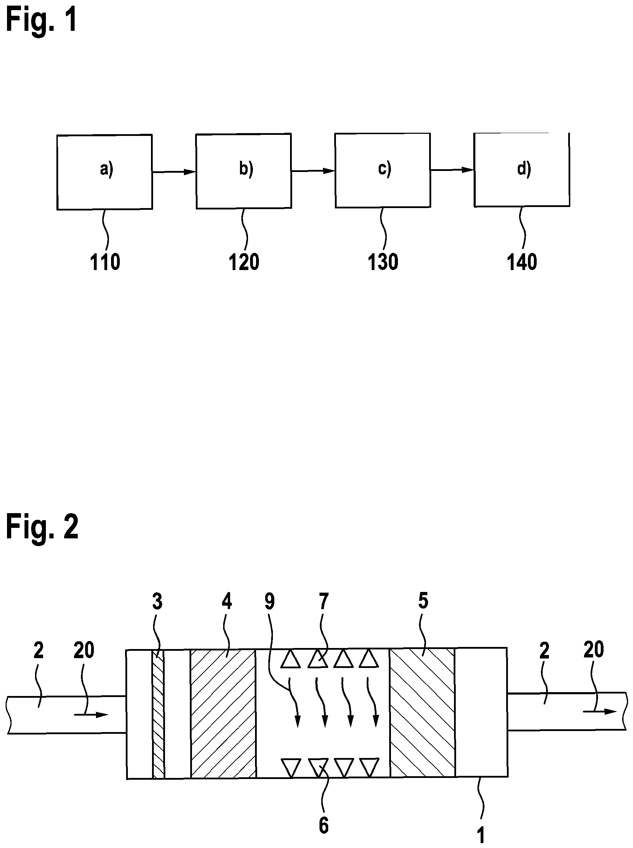

Fig. 1 zeigt beispielhaft und schematisch einen Ablauf eines hier vorgeschlagenen Verfahrens. Das Verfahren dient einer sicheren Entkeimung/ Desinfizierung eines Volumenstromes Wasser 2. Die mit Blöcken 110, 120 und 130 dargestellte Reihenfolge der Schritte a), b), c und d) kann sich bei einem regulären Betriebsablauf einstellen. Insbesondere können die Schritte a), b) und c) auch bei der Entkeimung eines Volumenstromes Wasser 2 gleichzeitig durchgeführt werden, wobei der Volumenstrom Wasser 2 zuerst einer Durchführung des Schrittes a), anschließend einer Durchführung des Schrittes b) zugeführt wird und anschließend eine Durchführung des Schritt c) erfolgt.

Fig. 2 zeigt beispielhaft und schematisch eine hier vorgeschlagene Filtereinheit 1. In einer Strömungsrichtung 20 des Volumenstromes Wasser 2 kann dieser einen Vorfilter 3, eine erstes Entkeimungsfilterelement 4, einen Sender 7 und einen Empfänger 6 für UV-Strahlung 9 und ein zweites Entkeimungsfilterelement 5 aufweisen.

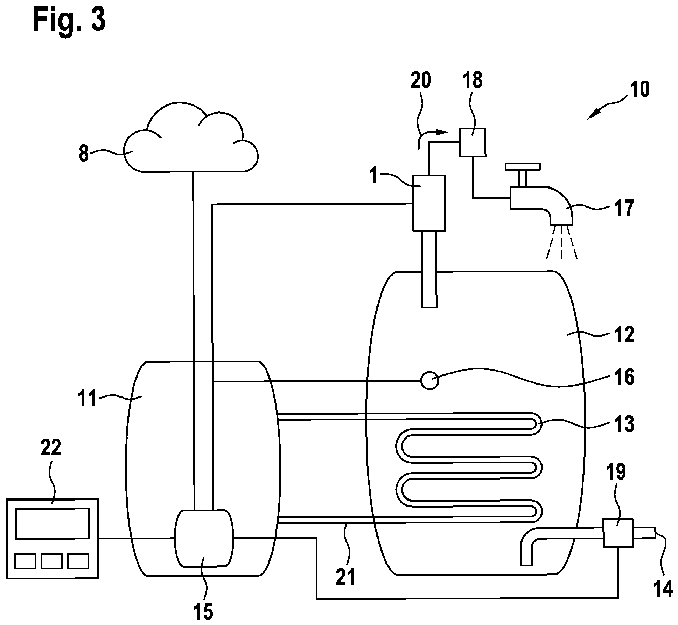

Fig. 3 zeigt beispielhaft und schematisch eine hier vorgeschlagene Anordnung 10 zur Bereitstellung von Warmwasser. Diese kann einen Wärmeerzeuger 11 umfassen, beispielsweise ein Innenteil einer Wärmepumpe, das über einen Kältekreis mit einem Außenteil verbunden sein kann. Der Wärmeerzeuger 11 kann dazu eingerichtet sein, Wärme über einen Heizkreislauf 21 einem Wärmetauscher 13 zuzuführen und damit in einem Warmwasserspeicher 12 befindliches Warmwasser zu erwärmen. Die Anordnung 10 kann ein Regel- und Steuergerät 15 umfassen, welches dazu eingerichtet sein kann, ein hier vorgeschlagenes Verfahren durchzuführen. Das Regel- und Steuergerät 15 kann mit einem Temperatursensor 16, der eine Temperatur des Warmwassers in Warmwasserspeicher 12 erfassen kann, einem Durchflusssensor 19, einer hier vorgestellten Filereinheit 1 sowie einer sekundären Entkeimungsvorrichtung 18 elektrisch verbunden sein. Der Durchflusssensor 19 kann in einer Frischwasserzufuhr 14 angeordnet sein und so eine bei einer Warmwasserentnahme über eine Entnahmestelle 17 nachfließende Durchflussmenge Frischwasser erfassen, die der entnommenen Menge Warmwasser entsprechen kann.

Die Filtereinheit 1 kann in einem Warmwasserauslass des Warmwasserspeichers 12 angeordnet sein und so zu entnehmendes Warmwasser entkeimen.

In Strömungsrichtung 20 der Filtereinheit 1 nachgeordnet kann eine sekundäre Entkeimungseinrichtung 18 positioniert sein. Die sekundäre Entkeimungseinrichtung 18 kann beispielsweise mittels (intensiver) UV-Strahlung eine Entkeimung bewirken.

In Block 110 kann gemäß Schritt a) ein Entkeimen des Volumenstromes Wasser 2 durch ein erstes Entkeimungsfilterelement 4 erfolgen.

In Block 120 kann gemäß Schritt b) der Volumenstrom Wasser 2 mit von einem Sender 7 ausgestrahlter UV-Strahlung 9 beaufschlagt werden und die UV-Strahlung 9 nach einem zumindest teilweisen Durchdringen des Volumenstromes Wasser 2 durch den Empfänger 6 erfasst werden.

In Block 130 kann gemäß Schritt c) eine Keimbelastung des Volumenstromes Wasser 2 durch Auswerten der in Schritt b) erfassten UV-Strahlung (nach einem zumindest teilweisen Durchdringen des Volumenstromes Wasser 2) festgestellt werden.

In Block 140 kann gemäß einem optionalen Schritt d) der Volumenstrom Wasser 2 einem zweiten Entkeimungsfilterelement 5 zugeführt werden, welches bei einem Feststellen einer Keimbelastung in Schritt c) den Volumenstrom Wasser 2 entkeimen kann.

Gemäß einer vorteilhaften Ausgestaltung kann eine Kapazitätsgrenze des zweiten Entkeimungsfilterelements 5 durch Erreichen einer vorgegebenen Standzeit oder Durchflussmenge, beispielsweise ermittelt durch den Durchflusssensor 19, erkannt werden.

Gemäß einer weiteren vorteilhaften Ausgestaltung kann bei einem Feststellen einer Keimbelastung in Schritt c) oder insbesondere bei einem Erreichen einer vorgegebenen Kapazitätsgrenze des zweiten Entkeimungsfilterelementes 5 eine sekundäre Entkeimungseinrichtung 18 in Betrieb genommen werden.

Gemäß einer vorteilhaften Ausgestaltung kann das Regel- und Steuergerät 15 mit einem Netzwerk 8 und einer Anzeigeeinrichtung 22 verbunden sein. Bei einem Feststellen einer Keimbelastung in Schritt c) kann eine Information hierzu über die Anzeigeeinrichtung 22 angezeigt und/ oder über das Netzwerk 8 zum Abruf bereitstellt und/ oder als Nachricht versendet werden. Das Netzwerk kann hierbei insbesondere das Internet sein. In vorteilhafter Weise kann somit bei einer Feststellung einer Keimbelastung gemäß Schritt c) ein Nutzer und/oder ein Fachbetrieb über den Ausfall des ersten Entkeimungsfilterelementes 4 und/ oder des Erreichens der Kapazitätsgrenze des zweiten Entkeimungsfilterelementes 5 informiert werden. Bis ein Wartungstermin zur Erneuerung von erstem und zweitem Entkeimungsfilterelement 4,5 durchgeführt werden kann, kann eine sichere Entkeimung des Warmwassers durch die sekundäre Entkeimungseinrichtung 18 gewährleistet werden.

### Bezugszeichenliste

- 1: Filtereinheit
- 2: Volumenstrom Wasser
- 3: Vorfilter
- 4: erstes Entkeimungsfilterelement
- 5: zweites Entkeimungsfilterelement
- 6: Empfänger
- 7: Sender
- 8: Netzwerk
- 9: UV-Strahlung
- 10: Anordnung
- 11: Wärmerzeuger
- 12: Warmwasserspeicher
- 13: Wärmetauscher
- 14: Frischwasserzufuhr
- 15: Regel- und Steuergerät
- 16: Temperatursensor
- 17: Entnahmestelle
- 18: sekundäre Entkeimungseinrichtung
- 19: Durchflusssensor
- 20: Strömungsrichtung
- 21: Heizkreislauf
- 22: Anzeigeeinrichtung

## Patentansprüche

1. Verfahren zur Desinfektion eines Volumenstromes Wasser (2), umfassend zumindest die folgenden Schritte:
a) Entkeimen des Volumenstromes Wasser (2) durch ein erstes Entkeimungsfilterelement (4),
b) Bestrahlen des Wassers mit Ultraviolett (UV)-Strahlung (9) und Erfassen der UV-Strahlung (9) nach einem zumindest teilweisen Durchdringen des Volumenstromes Wasser (2),
c) Feststellen einer Keimbelastung des Volumenstromes Wasser (2) und damit eines Erfolges des Entkeimens gemäß Schritt a) durch Auswerten der erfassten UV-Strahlung (9).

2. Verfahren nach Anspruch 1, wobei in Schritt b) das der Volumenstrom Wasser (2) mit UV-C Strahlung beaufschlagt und in Schritt c) eine Keimbelastung bei einem Erfassen von UV-A und/ oder UV-B Strahlung festgestellt wird.

3. Verfahren nach einem der vorangehenden Ansprüche, wobei nach einem Feststellen einer Keimbelastung in Schritt c) eine sekundäre Entkeimungseinrichtung (18) in Betrieb genommen wird.

4. Verfahren nach einem der vorangehenden Ansprüche, wobei bei einem Feststellen einer Keimbelastung in Schritt c) eine Information hierzu über eine Anzeigeeinrichtung (22) und/ oder ein Netzwerk (8) zum Abruf bereitstellt und/ oder als Nachricht versendet wird.

5. Verfahren nach einem der vorangehenden Ansprüche, wobei in einem Schritt d) der Volumenstrom Wasser (2) einem zweiten Entkeimungsfilterelement (5) zugeführt wird und nach einem Feststellen einer Keimbelastung in Schritt c) und Erreichen einer Kapazitätsgrenze des zweiten Entkeimungsfilterelements (5) eine Wasserabgabe gestoppt und/ oder eine sekundäre Entkeimungseinrichtung (18) in Betrieb genommen, und/ oder eine Information über das Erreichen der Kapazitätsgrenze über eine Anzeigeeinrichtung (22) angezeigt und/ oder über ein Netzwerk (8) bereitgestellt und/ oder als Nachricht versandt wird.

6. Verfahren nach Anspruch 5, wobei die Kapazitätsgrenze des zweiten Entkeimungsfilterelements (5) durch Erreichen einer vorgegebenen Standzeit oder Wassermenge erkannt wird.

7. Verfahren nach einem der vorangehenden Ansprüche, wobei eine Überwachung der Strahlungsintensität der UV-Strahlung (9) erfolgt und bei einem Unterschreiten eines Grenzwertes der Strahlungsintensität eine Wasserabgabe gestoppt oder eine sekundäre Entkeimungseinrichtung (18) in Betrieb genommen, und/ oder eine Information über das Erreichen des Grenzwertes über eine Anzeigeeinrichtung (22) angezeigt, über ein Netzwerk (8) bereitgestellt und/ oder als Nachricht versandt wird.

8. Filtereinheit (1) zur Durchführung eines Verfahrens nach einem der vorangehenden Ansprüche, umfassend ein erstes Entkeimungsfilterelement (4), einen Sender (7) von UV-Strahlung (9) und einen Empfänger (6) von UV-Strahlung (9).

9. Filtereinheit nach Anspruch 8, umfassend ein zweites Entkeimungsfilterelement (5).

10. Filtereinheit (1) nach einem der Ansprüche 8 oder 9, umfassend ein Vorfilterelement (3).

11. Filtereinheit (1) nach einem der Ansprüche 8 bis 10, wobei das erste Entkeimungsfilterelement (4) und/ oder das zweite Entkeimungsfilterelement (5)
- ein Sterilfilter,
- eine Ultrafiltration,
- eine Umkehrosmose,
- ein Hygienefilter basierend auf dem Gecko-Prinzip, oder
- ein Adsorptionsfilter
ist oder umsetzt, oder eine Kombination derselben ist oder umsetzt.

12. Filtereinheit nach einem der Ansprüche 8 bis 11, wobei Sender (7) und/ oder Empfänger (6) von UV-Strahlung (9) UV-Leuchtdioden sind.

13. Anordnung (10) zur Bereitstellung von Warmwasser, aufweisend eine Filtereinheit (1) nach einem der Ansprüche 8 bis 12.

14. Anordnung (10) nach Anspruch 13, aufweisend eine sekundäre Entkeimungseinrichtung (18).

15. Verwendung eines Senders (7) und eines Empfängers (6) zur Überwachung der Entkeimung eines Entkeimungsfilterelementes (4) für einen Volumenstrom Wasser (2).
